# EUROPEAN PATENT APPLICATION

(11) **EP 4 206 772 A1**
(43) Date of publication of application: **05.07.2023**
(21) Application number: 22216123.4
(22) Date of filing: 22.12.2022
(51) Int. Cl.: G02B 6/44

(54) **FLEXIBLE OPTICAL FIBER CABLE**

(30) Priority: 28.12.2021 IN 202111061174
(71) Applicant: Sterlite Technologies Limited, Haryana 122002 (IN)
(72) Inventor: Marru, Pramod, 122002 Gurugram (IN); Kumar, Sravan, 122002 Gurugram (IN)
(74) Representative: Petraz, Gilberto Luigi

(57) **Abstract**

The present disclosure relates an optical fiber cable (100) comprising one or more optical fiber (102), one or more loose tubes (104) surrounding one or more optical fiber (102) and an outer sheath (108) surrounding one or more loose tube (104). Particularly, the material composition of one or more loose tubes (104) and outer sheath (108) is a mixture of a first material and a second material. Moreover, the flexural modulus of the first material is at least 1000MPa and the second material is at most 50MPa.

## Description

### TECHNICAL FIELD

Embodiments of the present disclosure relate to the field of flexible solutions for protecting and sealing cable access locations, cable assemblies and optical interconnection points, and more particularly, relates to a flexible optical fiber cable and material properties of such flexible optical fiber cable.

This application claims the benefit of Indian Application No. 202111061174 titled "Flexible Optical Fiber Cable," filed by the applicant on 28/12/2021, which is incorporated herein by reference in its entirety.

### BACKGROUND ART

Telecommunication cables are ubiquitous and used for distributing all manner of data across vast networks. The majority of cables are electrically conductive cables (typically copper), although the use of optical fiber cables is growing rapidly over the last few years in telecommunication systems as optical fibers provide several advantages over conventional communication lines. As compared with traditional wire-based networks, optical-fibre communication networks can transmit significantly more information at significantly higher speeds. Additionally, as data transmissions increase, the fiber optic network is being extended closer to the end-user which can be a premise, business, or private residence.

Fibre-optic telecommunications technology is becoming more prevalent as service providers strive to deliver higher bandwidth communication capabilities to customers/subscribers. The phrase "fiber to the x" (FTTX) generically refers to any network architecture that uses optical fiber in place of copper within a local distribution area. Example FTTX networks include fiber-to-the-node (FTTN) networks, fiber-to-the-curb (FTTC) networks and fiber-to-the-premises (FTTP) networks.

An optical fiber (i.e., a glass fiber typically surrounded by one or more coating layers) conventionally includes an optical fiber core, which transmits and/or amplifies an optical signal, and an optical cladding, which confines the optical signal within the core. Accordingly, the refractive index of the core nc is typically greater than the refractive index of the optical cladding ng (i.e., nc>ng).

Individual optical fibers (e.g., glass, plastic) can be fragile when exposed thereby risking their breakage while handling and kink defects while rolling on a spindle for storage or transport purposes. Optical fiber cables and tubes inside the cables undergo various bending movements during handling and installation. In addition, they may be damaged if they are subjected to excessive tension or physical impact. Therefore, as a measure to prevent fracturing or breakage, optic fibers are encapsulated inside loose tubes. Moreover, optical fiber can be subject to physical routes limited to a minimum bend radius, at the cable level and/or at an individual fiber level, to prevent fracturing, breakage, or signal distortions/losses.

In general, loose tubes are also known as buffer tubes and are used to encapsulate one or more optical fibers to cater to various needs like mechanical isolation, prevention from damage and the like. Conventionally, the loose tubes are made up of polymers like polypropylene, polycarbonate, PBT and the like. Loose Tube type fiber optic cables ("free buffered") typically use cross-wrap braids that are wound in the form of a counter spiral winding around the cable core to restrain twisted buffer tubes containing optical fibers, in particular, with such configurations of buffer tubes that include configurations with reversing the directions of twist of the buffer tubes, where the direction of twisting of the buffer tubes periodically reverses around the (rectilinear) centre linear strength element along the length of the core. The central force element is typically a core of rigid material. Buffer tubes are typically cylindrical tubes (typically with an outer diameter of 2 to 3 mm) that contain optical fibers. The empty space inside the buffer tube can be made water-repellent using grease.

Additionally, the optical fiber cables are also protected by using a polyethene outer sheath. The outer sheath is extruded over the loose tubes providing strength and crush resistance to the cable.

US patent application no. US8145026B2 titled "Reduced-size flat drop cable" discloses deployment of optical fibers in improved drop-cable structures. In particular, the buffer tubes are made of polyolefin blends such as polyethene and polypropylene. Moreover, additives such as nucleating agents, flame-retardants, smoke-retardants, antioxidants, UV absorbers, and/or plasticizers are advantageously used.

US patent application no. US2010084158A1 titled "Flexible, High Temperature Rated LLDPE Jacket Composition" discloses polymer compositions composed of a polyethylene resin (e.g., LLDPE), carbon black and an olefin block interpolymer are provided, the production of wire and cable jacketing that possess an increased high temperature rating, flexibility and comparable ease of removal of the jacket from the cable core.

WIPO patent application no. WO2021122299A1 titled "Blend comprising polyethylene based recyclate" discloses upgrading of PE recycling streams using virgin high-density polyethylenes (HDPE) to give jacketing materials that have acceptable ESCR (Environmental Stress Crack Resistance) and/or strain hardening performance.

However, there are a number of drawbacks in the currently similar technologies employing loose tubes and/or a protective outer sheath for providing flexibility to the optical fiber. Particularly, the loose tubes are stiff and are difficult to handle and coil during installation. Moreover, the sheath and the tube materials make the cable stiffer and as the cable diameter increases, it is more challenging to handle the optical fiber. Furthermore, loose tubes made up of higher density polyethylene resins (MDPE, HDPE) are harder to handle, less flexible and more difficult to strip and remove. Further, micro bending is another phenomenon that induces added loss in fiber signal strength. Micro bending is induced when small stresses are applied along the length of an optical fiber, perturbing the optical path through microscopically small deflections in the core.

In the light of the above-stated discussion, there is a need for a better, more flexible material for the loose tubes and outer sheath of the optical fiber cables to overcome the disadvantages stated above.

### SUMMARY OF THE DISCLOSURE

Embodiments of the present disclosure provide an optical fiber cable comprising one or more optical fiber, one or more loose tubes surrounding one or more optical fiber and an outer sheath surrounding one or more loose tube. In particular, the material of one or more loose tubes is a mixture of a first material and a second material. Moreover, the flexural modulus of the first material is at least 1000 MPa, and the flexural modulus of the second material is at most 50 MPa.

According to the first aspect, the first material is a base material in the mixture, and the second material is added to the first material to form the mixture, wherein the first material is polypropylene.

According to a second aspect of the present disclosure, the second material is polybutene, wherein the second material is added to the first material with a weight percentage of 2% to 10%.

In accordance with an embodiment of the present disclosure, one or more optical fiber is at least one of loose fiber, flat ribbon, corrugated ribbon and IBR.

According to the third aspect of the present disclosure, the bend diameter of one or more loose tubes is reduced by at least 10% compared to a conventional loose tube. And the material of the conventional loose tube is the first material without blending of the second material.

According to the fourth aspect of the present disclosure, the kink diameter of one or more loose tubes is reduced by at least 10% compared to the conventional loose tube, and the material of the conventional loose tube is the first material without blending of the second material.

In accordance with an embodiment of the present disclosure, one or more loose tubes breaks at an elongation of at least 700%. In particular, one or more loose tubes is at least one of a central tube and a plurality of loose tubes containing optical fibers.

In accordance with an embodiment of the present disclosure, the first material has a melting point of around 160 degrees Celsius. And, the second material has a melting point of around 135 degrees Celsius. In particular, the melting point of the second material is within 25% tolerance of a melting point of one or more loose tubes and the outer sheath of the optical fiber cable.

According to the fifth aspect of the present disclosure, optical fiber cable comprises one or more optical fibers extending longitudinally along a length of the optical fiber cable and an outer sheath surrounding one or more optical fiber. In particular, the material of the outer sheath is a mixture of a first material and a second material. And, the flexural modulus of the first material is at least 500 MPa, and the flexural modulus of the second material is at most 50 MPa.

In accordance with an embodiment of the present disclosure, the outer sheath (108) is embedded with one or more embedded strength members.

In accordance with an embodiment of the present disclosure, one or more optical fiber is placed inside one buffer tube or bundled by a binder.

The foregoing solutions of the present disclosure are attained by employing an optical fiber cable with optical fiber, loose tubes surrounding one or more optical fiber and an outer sheath surrounding one or more loose tubes.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 is a cross-sectional view illustrating an exemplary flexible optical fiber cable in accordance with an embodiment of the present disclosure;
Fig. 2 is a sequence block diagram illustrating manufacturing of the flexible loose tube of an optical fibre cable in accordance with an embodiment of the present disclosure;
Fig. 3 is a sequence block diagram illustrating manufacturing the flexible sheath of the flexible optical fibre cable in accordance with an embodiment of the present disclosure.

### REFERENCE LIST

Optical fiber cable - 100
One or more optical fiber - 102
One or more loose tube - 104
First layer - 106
Outer sheath - 108
Plurality of water-swellable yarns - 110
Central strength member - 112
Ripcord - 114
One or more embedded strength members - 116
First material unit - 202, 302
Second material unit - 204, 304
Hopper - 206, 306
Payoff - 208, 308
Tube extruder - 210, 310
Water through - 212, 312
Takeaway drum - 214, 314

The flexible optical fiber cable for optical cables is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of elements or steps but not the exclusion of any other element or step or group of element or steps.

The term "including" is used to mean "including but not limited to". "Including" and "including but not limited to" are used interchangeably.

Following terms shall apply throughout the present disclosure:
Optical fiber refers to a medium associated with the transmission of information over long distances in the form of light pulses. The optical fiber uses light to transmit voice and data communications over long distances when encapsulated in a jacket/sheath. The optical fiber may be of ITU.T G.657.A2 category. Alternatively, the optical fiber may be of ITU.T G.657.A1 or G.657.B3 or G.652.D or other suitable categories.

ITU.T stands for International Telecommunication Union-Telecommunication Standardization Sector, is one of the three sectors of the ITU. The ITU is the United Nations specialized agency in the field of telecommunications and is responsible for studying technical, operating and tariff questions and issuing Recommendations on them with a view to standardizing telecommunications on a worldwide basis.

Flexural modulus is the tendency of a material to bend or is described in terms of flexural deformation, the ratio of stress to strain.

Polypropylene is a material commonly used for manufacturing loose tubes as a strong material is needed to make tubes to provide crush resistance.

Fibre-reinforced plastic is a composite material made of a polymer matrix reinforced with glass fibers.

Polybutene is an organic polymer made from a mixture of 1-butene, 2-butene and isobutylene. Polybutene is a low reactivity compound used as sealants, adhesives, extenders for putties used for sealing roofs and windows, coatings, polymer modification, tackified polyethylene films, personal care and polybutene emulsions.Polybutene is used to make tubes little flexible to help during handling or installation.

Hopper is a large container in the shape of a pyramid or cone shape. Hopper is used in industrial processes to hold particulate matter or flow-able material like dust, gravel, nuts, seeds, small metal or plastic assembly components.

Extruder is simply a machine used to complete the extrusion process. Using a system of barrels and cylinders, the extruder heats up the product and propel the product through the die to create the desired shape.

Takeaway drum is a collection system used to collect material in from a spool or coil from a manufacturing process.

Payoff is a supply system used to supply material from a spool or coil into a manufacturing process, inspection operation, or simply to a take-up unit for respooling.

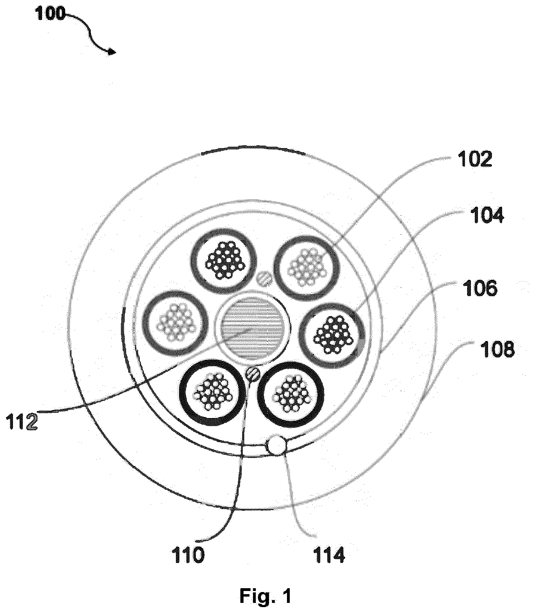

**AA** Fig. 1 is a cross-sectional view illustrating an exemplary flexible optical fiber cable in accordance with an embodiment of the present disclosure. Particularly, the optical fiber cable 100 is a flexible optical fiber cable. Moreover, the optical fiber cable 100 is used for carrying light over long distances. Or, the optical fiber cable 100 may simply be used to transmit optical signals (which may carry sensor data or communication data).

The optical fiber cable 100 includes one or more optical fiber 102, one or more loose tube 104 and a first layer 106. Additionally, the optical fiber cable 100 includes an outer sheath 108, a plurality of water-swellable yarns 110, a central strength member 112 and ripcord 114.

In accordance with an embodiment of the present disclosure, one or more optical fiber 102 extends longitudinally along a length of the optical fiber cable 100. In particular, one or more optical fiber 102 is a fiber used for transmitting information as light pulses from one end to another. Each of one or more optical fiber 102 is a thin strand of glass or plastic capable of transmitting optical signals. Moreover, one or more optical fiber 102 is configured to transmit large amounts of information over long distances with relatively low attenuation. Further, each of one or more optical fiber 102 includes a core region and a cladding region. The core region is the inner part of an optical fiber and the cladding section is the outer part of the optical fiber surrounding the core region. Subsequently, the core region is defined by a central longitudinal axis of each of one or more optical fiber 102.

Particularly, the core region and the cladding region are formed along the central longitudinal axis of each of one or more optical fiber 102 during the manufacturing stage of each of one or more optical fiber 102. Moreover, the refractive index of the core region is greater than the refractive index of the cladding region.

In one aspect of the present disclosure, the core region has a higher refractive index than the cladding region.

In accordance with an embodiment of the present disclosure, each of one or more optical fiber 102 has a diameter of about 160 microns or 250 microns. Alternatively, the diameter of each of one or more optical fiber 102 may vary.

In accordance with an embodiment of the present disclosure, each of one or more optical fiber 102 is a single-mode fiber. Alternatively, each of one or more optical fiber 102 is a multimode fiber.

In an aspect of the present disclosure, one or more optical fiber 102 is at least anyone but not limited to loose fiber, flat ribbon, corrugated ribbon and IBR.

In accordance with an embodiment of the present disclosure, each of one or more loose tube 104 encloses one or more optical fiber 102. In particular, each of one or more loose tube104 surrounds one or more optical fiber 102. Moreover, each of one or more loose tube 104 is a tube for encapsulating one or more optical fiber 102. Further, one or more loose tube104 provides support and protection to each of one or more optical fiber 102 against crush, bend and stretch. In addition, one or more loose tube104protects one or more optical fiber 102 and prevents ingression of water inside. one or more loose tube 104 also provides mechanical isolation, physical damage protection and identification of each of one or more optical fiber 102. In an aspect, one or more loose tube 104 provides a single layer core construction.

In accordance with an embodiment of the present disclosure, one or more optical fiber 102 may be placed inside a buffer tube or bundled by a binder. An exemplary illustration of Fig.1 shows each of one or more loose tube 104 encloses 12 optical fibers.

In accordance with an embodiment of the present disclosure, the material of one or more loose tube 104 is a mixture of a first material and a second material. A flexural modulus of the first material is at least 1000 MPa and the second material is at most 50 MPa. In particular, the second material has a lower flexural modulus as compared to the first material. Moreover, the second material is added to the first material to form the mixture.

In one aspect, the first material is polypropylene. Alternatively, the first material may be a different material.

In another aspect, the second material is polybutene. Alternatively, the second material may be a different material.

In yet another aspect, the second material is added to the first material with a weight percentage of 2% to 10% during manufacturing. A conventional polypropylene (PP) loose tube has a flexural modulus greater than 1000 MPa. After blending 2-10% polybutene or PB-1, the flexural modulus comes down to 600-900MPa.

In accordance with an embodiment of the present disclosure, one or more loose tube 104 has a bend diameter. In particular, the bend diameter of one or more loose tube 104 is reduced by at least 10% compared to a conventional loose tube. The material of the conventional loose tube is the first material without the second material or without the blending of the second material. one or more loose tube 104 has a kink diameter. Moreover, the kink diameter of one or more loose tube 104 is reduced by at least 10% compared to the conventional loose tube. Further, the material of the conventional loose tube is the first material without the second material or without the blending of the second material.

In an aspect, one or more loose tube 104 breaks at an elongation of at least 700%. Alternatively, elongation may vary.

In an aspect, one or more loose tube 104 is at least one of a central tube and a plurality of loose tubes containing optical fibers.

The melting point of the second material is within 25% tolerance of a melting point of material of one or more loose tube104 of the optical fiber cable100. The melting point of the first material is around 160 degrees Celsius. Alternatively, the melting point of the first material may vary. The melting point of the second material is around 135 degrees Celsius. Alternatively, the melting point of the second material may vary.

Each of one or more loose tube 104 may or may not be filled with a gel. In particular, the gel is a thixotropic gel. Moreover, the thixotropic gel is used for filling in empty spaces inside each of one or more loose tubes 104. Subsequently, the thixotropic gel prevents the ingression of water inside each of one or more loose tubes 104.

In accordance with an embodiment of the present disclosure, the optical fiber cable 100 may or may not include the first layer 106. Particularly, the first layer 106 surrounds one or more loose tube 104. Moreover, the first layer 106 acts as a binding element for binding one or more loose tube 104. Further, the first layer 106 includes one or more yarn.

Each of one or more yarns is a binder yarn. Particularly, the binder yarn is made of a material selected from a group consisting of polyester, aramid and polypropylene. Moreover, each of one or more yarns is a yarn thread. Further, the first layer 106 may be any other type of layer depending on the application.

The binder yarn facilitates the absorption of water and moisture. And, each of one or more yarns prevents ingression of the water inside the optical fiber cable 100. The optical fiber cable 100 may have any number of yarn threads. Particularly, the first layer 106 binds the stranded one or more loose tube 104 to prevent the opening up of the S-Z stranded one or more loose tube 104. Alternatively, the first layer 106 provides retention of the lay length of one or more loose tube 104.

In accordance with an embodiment of the present disclosure, the outer sheath 108 surrounds the first layer 106. In particular, the outer sheath 108 is a high density polyethylene (HDPE) jacket. Moreover, the outer sheath 108 layer interacts directly with the ambient environment. Further, the outer sheath 108 is a sheathing layer. And, the outer sheath 108 protects the optical fiber cable 100 against crush, bend and tensile stress along the length of the optical fiber cable 100.

In an aspect, the outer sheath 108 is characterized by a thickness of at least 0.5mm. Alternatively, the thickness of the outer sheath 108 may vary.

In an aspect, the outer sheath 108 is black in color. Alternatively, the outer sheath 108 may be of any color.

A material of the outer sheath 108 is a mixture of a first material and a second material. Aflexural modulus of the first material is at least 500 MPa and the flexural modulus of the second material is at most 50 MPa. The first material is a base material in the mixture and the second material is added to the first material to form the mixture. In an aspect, the first material is polyethylene. Alternatively, the first material may be a different material.

In an aspect, the second material is polybutene. Alternatively, the second material may be a different material. In an aspect, the second material is added to the first material with a weight percentage of 2% to 10% during manufacturing. In particular, the range of 2% to 10% is significant. If the weight percentage is less than 2%, the flexibility improvement will not be sufficient for handling easiness. If the weight percentage is more than 10 %, the sheath or tube will become too flexible and may not satisfy the crushing requirement.

In accordance with an embodiment of the present disclosure, the outer sheath 108 has a bend diameter. In particular, the bend diameter of the outer sheath 108 is reduced by at least 10% compared to a conventional outer sheath. The material of the conventional outer sheath is the first material without the second material or without the blending of the second material. Moreover, the outer sheath 108 has a kink diameter. The kink diameter of the outer sheath 108is reduced by at least 10% compared to the conventional outer sheath. The material of the conventional outer sheath is the first material without the second material or without the blending of the second material. The overall flexural modulus of the material of the outer sheath 108 reduced by blending a low flexural modulus material.

In accordance with an embodiment of the present disclosure, the blending of low flexural material PB-1 in PP or PE makes the overall composition with reduced flexural modulus and hence, increases the material flexibility. In case, a cable component made with dual-layer PP-PB1 or PE-PB1 will have only an outer/inner layer made of a flexible material i.e. PB-1. The overall flexibility of the component will not reduce as compared to a single-layered PP/PE material.

In accordance with an embodiment of the present disclosure, the optical fiber cable 100 may or may not include the plurality of water-swellable yarns 110. Particularly, the plurality of water-swellable yarns 110 are positioned between one or more loose tube 104. Moreover., the plurality of water-swellable yarns 110 prevents ingression of the water in the stranded core of the optical fiber cable 100.

In one aspect, the number of the plurality of water-swellable yarns 110 is 2. Alternatively, the number of the plurality of water-swellable yarns 110 may vary.

In accordance with an embodiment of the present disclosure, the optical fiber cable 100 include at least one of the central strength member 112 and one or more embedded strength member. Moreover, the central strength member 112 is made of a fibre-reinforced plastic such as glass fiber, carbon fiber, aramid fiber and the like. In an aspect, the central strength member 112 is made of any suitable material.

The central strength member 112 provides tensile strength and stiffness to the optical fiber cable 100 to facilitate blowing. The tensile strength corresponds to a resistance shown by the optical fiber cable 100 against breaking when tension is applied. Moreover, the central strength member 112 provides physical strength to the optical fiber cable 100 and resists over bending of the optical fiber cable 100. Also, the central strength member 112 prevents buckling of the optical fiber cable 100.

In an aspect, the optical fiber cable 100 includes one or more embedded strength members. Particularly, one or more embedded strength member is embedded in the outer sheath 108 of the optical fiber cable 100. Moreover, one or more embedded strength member lies substantially along a longitudinal axis of the optical fiber cable 100. Further, one or more embedded strength member provides tensile strength and stiffness to the optical fiber cable 100.

In an aspect, one or more embedded strength members is made of a material selected from a group of fibre-reinforced plastic, aramid reinforced plastic, a steel wire or any other desired material. Moreover, one or more embedded strength members is characterized by a diameter.

In an aspect, one or more embedded strength member has a diameter of about at least 0.5 mm. Alternatively, the diameter of one or more embedded strength member may vary.

In an aspect, the number of one or more embedded strength members is 2. Alternatively, the number of one or more embedded strength members may be more than 2.

In accordance with an embodiment of the present disclosure, the optical fiber cable 100 may or may not include the ripcord 114. Particularly, the ripcord 114 is placed inside the outer sheath 108. The ripcord 114 lies substantially along the longitudinal axis of the optical fiber cable 100. Moreover, the ripcord 114 facilitates stripping of the outer sheath 108. Further, the ripcord 114 is made of polyester material. Alternatively, the ripcord 114 is made of any suitable material. The ripcord 114 has a circular cross-section. In an aspect, the number of the ripcord 114 is 1. Alternatively, the number of the ripcord 114may vary.

In an example, a PP tube of 1.7/2.4mm (ID/OD) is made with a blend of 4% PB-1. The tube shows a kink diameter of 8D (D = OD). Whereas a conventional PP tube has a kink diameter of 10D equaling to almost 20% reduction in kink diameter with PB-1.

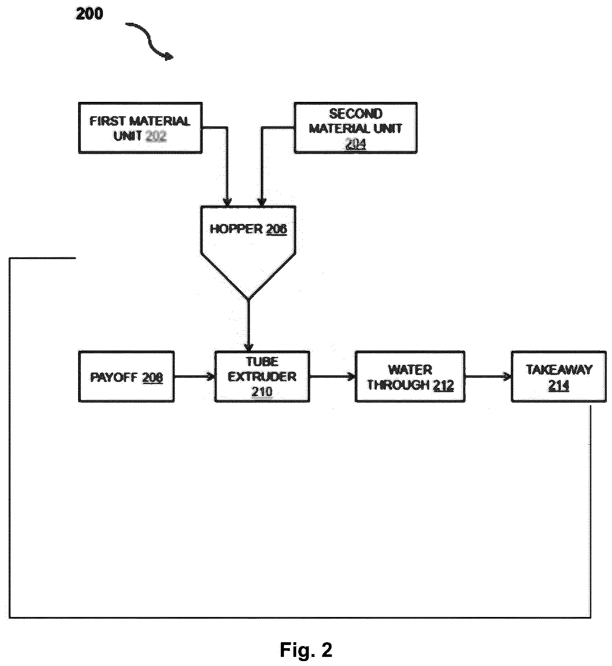

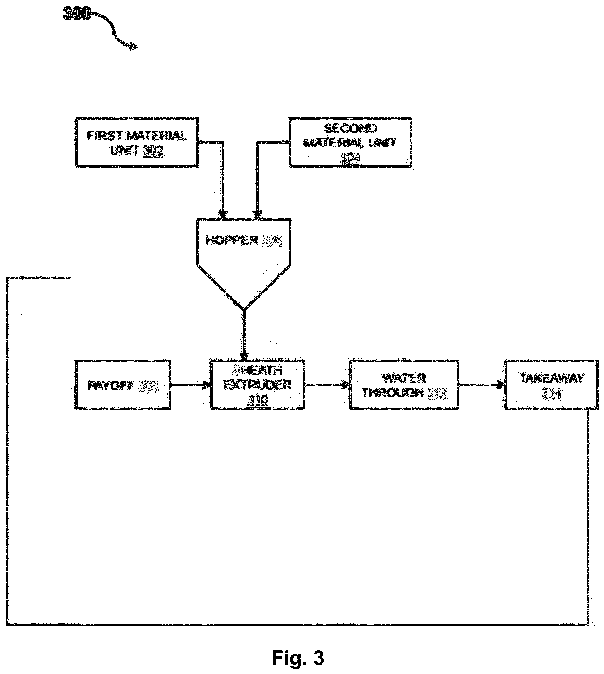

Fig. 2 and Fig. 3 are sequence block diagrams illustrating the manufacturing of the flexible loose tube and the flexible sheath of the optical fibre cable in accordance with an embodiment of the present disclosure. Block diagram 200 includes a first material unit 202, a second material unit 204, a hopper 206, a payoff 208, a tube extruder 210, water through 212 and a takeaway drum214. Block diagram 300 includes a first material unit 302, a second material unit 304, a hopper 306 a payoff 308, a sheath extruder 310, water through 312 and a takeaway drum 314.

Referring to Fig. 3 and Fig. 4, the first material unit 202/302 contains the first material and the second material unit 204/304 contains the second material. The first material and the second material are added to the hopper 206/306. Moreover, the first material is the base material for manufacturing one or more loose tube104 in the optical fiber cable100. Further, one or more optical fiber 102 is surrounded by the gel and enclosed inside one or more loose tube 104.

The loose tube 104 is the most widely used element in optical fiber cables for outside plant trunks because it offers protection for the fibres under high pulling tensions and can be easily protected from moisture with waterblocking gel or water-swellable yarns. Particularly, one or more loose tube 104 is surrounded by the outer sheath108. Subsequently, one or more optical fiber 102 and one more additional layer are covered with a substantial outer plastic sheath in order to reduce abrasion and to provide the cable with extra protection against external mechanical effects such as crushing.

The first material is polypropylene which is added to the hopper 206/306 as a base material. The second material is added to the first material inside the hopper 206/306. The second material is polybutene which is added to the first material to improve the flexibility of the first material while keeping other structural properties unaffected. The other structural properties include at least one of tensile strength, crush resistance and resistance to environmental conditions. The second material is added to the hopper 206/306 with a weight ratio between 2% to 10 % with respect to the first material. The first and second materials are added to the hopper 206/306 in one or more forms such as but not limited to solid form and liquid form.

In an exemplary example, with the addition of 4% polybutene in polypropylene, the kink diameter of one or more loose tube 104 is reduced by 20% as compared to the kink diameter of one or more loose tube 104 made with polypropylene only.

In another exemplary example, the optical fiber cable 100 may be used as IBR cables with flexible loose tubes/sheath and high fiber count for data centers.

In yet another exemplary example, the optical fiber cable 100 may be used as micro cables with flexible loose tubes for connectivity and networking.

In yet another exemplary example, the optical fiber cable 100 may be used as armoured cable with flexible loose tubes.

In accordance with an embodiment of the present disclosure, payoff 208/308 is configured to provide one or more optical fiber102 for manufacturing of the optical fiber cables 100. And, the tube extruder 210/310 is configured to receive the mixture from hopper 206/306. The extruder heats the mixture and converts it into a semi-liquid form. Subsequently, the heated mixture passes through the tube extruder 210/310 and forms one or more loose tube104. The tube extruder 210/310 receives one or more optical fiber 102 from the payoff 208//308. Moreover, one or more loose tube 104 is passed through the water through 212//312 to lower the temperature of one or more loose tube 104 to solidify one or more loose tube 104. Further, the takeaway drum 214/314. In general, the takeaway drum 214/314 collects one or more loose tube 104 in form of a coil.

Advantageously the present disclosure provides a flexible loose tube for an optical fiber cable in all application fields. Moreover, the variable flexibility composition for manufacturing flexible loose tubes and outer sheaths depends on the type of usage or application of the optical fiber cable.

While several possible embodiments of the disclosure have been described above and illustrated in some cases, it should be interpreted and understood as to have been presented only by way of illustration and example, but not by limitation. Thus, the breadth and scope of a preferred embodiment should not be limited by any of the above-described exemplary embodiments.

It will be apparent to those skilled in the art that other embodiments of the disclosure will be apparent to those skilled in the art from consideration of the specification and practice of the disclosure. While the foregoing written description of the disclosure enables one of ordinary skill to make and use what is considered presently to be the best mode thereof, those of ordinary skill will understand and appreciate the existence of variations, combinations, and equivalents of the specific embodiment, method, and examples herein. The disclosure should therefore not be limited by the above described embodiment, method, and examples, but by all embodiments and methods within the scope of the disclosure. It is intended that the specification and examples be considered as exemplary, with the true scope of the disclosure being indicated by the claims.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. An optical fiber cable (100) **characterized in that**:
one or more optical fiber (102);
one or more loose tube (104) surrounding the one or more optical fiber (102); and
an outer sheath (108) surrounding the one or more loose tube (104);
wherein material of the one or more loose tube (104) is a mixture of a first material and a second material;
wherein a flexural modulus of the first material is at least 1000 MPa and flexural modulus of the second material is at most 50 MPa.

2. The optical fiber cable (100) as claimed in claim 1, wherein the first material is a base material in the mixture and the second material is added to the first material to form the mixture, wherein the first material is polypropylene and the second material is polybutene.

3. The optical fiber cable (100) as claimed in claim 1, wherein the second material is added to the first material with a weight percentage of 2% to 10%.

4. The optical fiber cable (100) as claimed in claim 1, wherein the one or more optical fiber (102) is at least one of loose fiber, flat ribbon, corrugated ribbon and IBR.

5. The optical fiber cable (100) as claimed in claim 1, wherein a bend diameter of the one or more loose tube (104) is reduced by at least 10% compared to a conventional loose tube, and material of the conventional loose tube is the first material without blending of the second material.

6. The optical fiber cable (100) as claimed in claim 1, wherein a kink diameter of the one or more loose tubes (104) is reduced by at least 10% compared to the conventional loose tube, and material of the conventional loose tube is the first material without blending of the second material.

7. The optical fiber cable (100) as claimed in claim 1, wherein the one or more loose tubes (104) breaks at an elongation of at least 700%.

8. The optical fiber cable (100) as claimed in claim 1, wherein the one or more loose tubes (104) is at least one of a central tube and a plurality of loose tubes containing optical fibers.

9. The optical fiber cable (100) as claimed in claim 1, wherein melting point of the second material is within 25% tolerance of a melting point of the one or more loose tube (104) and the outer sheath (108) of the optical fiber cable (100).

10. The optical fiber cable (100) as claimed in claim 1, wherein the first material has a melting point of around 160 degrees Celsius, wherein the second material has a melting point of around 135 degrees Celsius.

11. An optical fiber cable (100) **characterized in that**:
one or more optical fiber (102) extending longitudinally along a length of the optical fiber cable (100); and
an outer sheath (108) surrounding the one or more optical fiber (102),
wherein material of the outer sheath (108) is a mixture of a first material and a second material,
wherein a flexural modulus of the first material is at least 500 MPa and flexural modulus of the second material is at most 50 MPa.

12. The optical fiber cable (100) as claimed in claim 11, wherein the first material is a base material in the mixture, and the second material is added to the first material to form the mixture, wherein the first material is polyethylene and the second material is polybutene.

13. The optical fiber cable (100) as claimed in claim 11, wherein the second material is added to the first material with a weight percentage of 2% to 10%.

14. The optical fiber cable (100) as claimed in claim 11, wherein the outer sheath (108) is embedded with one or more embedded strength members (116).

15. The optical fiber cable (100) as claimed in claim 11, wherein the one or more optical fiber (102) is at least one of loose fiber, flat ribbon, corrugated ribbon and IBR.
